# FASCICULE DE BREVET EUROPEEN

(11) **EP 1 767 130 B1**
(45) Date de publication et mention de la délivrance du brevet: **23.11.2011**
(21) Numéro de dépôt: 06024757.4
(22) Date de dépôt: 18.12.2003
(51) Int. Cl.: A47J 37/07

(54) **Dispositif de régulation de l'alimentation électrique d'un résistance pour barbecue**
Vorrichtung zur Regulierung der Stromzufuhr eines Widerstands für ein Grillgerät
Device for adjusting the electrical power supply to the resistor of a barbecue

(30) Priorité: 23.12.2002 FR 0216497
(43) Date de publication de la demande: 28.03.2007
(62) Demande divisionnaire de: 03293212.1
(73) Titulaire: SEB SA, 69130 Ecully (FR)
(72) Inventeur: Dauvergne, François, 74600 Seynod (FR)
(74) Mandataire: Lemoine, Jean-Sébastien

(56) Documents cités:
- WO-A-00/49839
- CA-A- 2 139 083
- GB-A- 809 858

## Description

La présente invention concerne un dispositif adapté à réguler l'alimentation électrique d'une résistance électrique, le dispositif et la résistance étant adaptés à être agencés dans un barbecue électrique.

Soit le barbecue est muni d'une grille de cuisson et la cuisson de l'aliment se fait par la transmission du rayonnement thermique provenant de la résistance électrique, la grille servant essentiellement de support, soit le barbecue est muni d'une plaque de cuisson et la cuisson de l'aliment se fait par son contact avec la plaque chauffée par la résistance, la plaque servant à la fois de support et de dispositif de cuisson.

Dans certains barbecues munis d'une plaque de cuisson, le dispositif de régulation de l'alimentation de la résistance comprend un thermostat connecté à une sonde de température, la sonde étant en contact avec la plaque de cuisson. De façon connue, la température de la plaque de cuisson est régulée par un phénomène de cycle de marche et d'arrêt de l'alimentation de la résistance : quand le circuit électrique est fermé, la température de la plaque et celle transmise au thermostat augmente jusqu'à atteindre une température pour laquelle le thermostat coupe l'alimentation ; et quand le circuit est ouvert, la température de la plaque et celle transmise au thermostat baisse jusqu'à atteindre une température pour laquelle le thermostat ferme le circuit d'alimentation.

La commande de l'alimentation de la résistance est directement dépendante de la température de la plaque de cuisson, de ce fait, un tel dispositif de régulation permet une régulation particulièrement précise.

Toutefois, un tel dispositif de régulation présente l'inconvénient de demander un positionnement précis de la sonde et du thermostat afin d'avoir un contact correct entre la sonde et la plaque de cuisson, ce qui a un impact relativement important sur le coût de fabrication du dispositif.

Par ailleurs, un tel dispositif n'est pas adapté à réguler l'alimentation de la résistance d'un barbecue muni d'une grille de cuisson, notamment du fait que le contact entre la sonde et la grille est très imparfait et que la température de la grille n'est pas pertinente pour la régulation, la grille ne servant pas de moyen de cuisson.

Un barbecue connu est décrit dans le document CA 2139083.

Ainsi, pour les barbecues munis d'une grille de cuisson, le dispositif de régulation de l'alimentation de la résistance comprend un doseur d'énergie, c'est à dire un interrupteur muni d'un bilame et actionné par la température générée par l'intensité et la quantité de courant traversant le bilame, le doseur régulant l'alimentation de la résistance par un phénomène de cycle d'ouverture et de fermeture du circuit : quand le circuit est fermé, le courrant électrique qui alimente la résistance électrique, traverse le bilame du doseur et le chauffe jusqu'à ce qu'il atteigne une température de déformation qui provoque l'ouverture du circuit, cette température correspondant à une quantité d'énergie électrique transmise à la résistance et consommée par celle-ci ; et quand l'alimentation de la résistance et du doseur est coupée, la température du bilame baisse jusqu'à atteindre une température pour laquelle le bilame revient à nouveau en position de fermeture du circuit d'alimentation.

Un premier avantage d'une tel dispositif est qu'il est particulièrement bien adaptée à un barbecue muni d'une grille de cuisson : la régulation de l'alimentation de la résistance dépend directement de la quantité d'énergie électrique ayant traversée le bilame du doseur et la résistance, et donc de la quantité d'énergie thermique transmise par rayonnement à l'aliment à cuire.

Un autre avantage est que sa mise en place est particulièrement simple, le doseur d'énergie n'étant qu'un simple interrupteur. De ce fait, certains barbecues munis d'une plaque de cuisson sont eux aussi régulés par un doseur d'énergie.

Cependant, la régulation des barbecues munis d'une plaque de cuisson par un doseur d'énergie présente l'inconvénient d'être indépendante de la température de la plaque. Ainsi, quand un aliment froid est posé sur la plaque, la température de cette dernière baisse, mais le dispositif de régulation n'est pas influencé par cette baisse, la quantité d'énergie ayant traversé le bilame et la résistance n'ayant pas baissée.

Un autre inconvénient des dispositif de régulation muni d'un doseur d'énergie réside dans le fonctionnement même du doseur : la coupure de l'alimentation dépend de la température du bilame et donc de l'intensité du courant électrique le traversant. Ainsi, en fonction de la tension du courant électrique du secteur d'un pays donné et pour une résistance électrique d'une puissance donnée, il est nécessaire d'avoir une résistance électrique et un doseur adapté à la tension du pays.

Ainsi, à chaque type de barbecue, muni d'une plaque ou d'une grille, correspond à ce jour un dispositif de régulation de l'alimentation électrique de la résistance qui est propre au type de barbecue et qui permet d'obtenir une régulation adaptée au mode de cuisson du barbecue, ce qui multiplie le nombre de dispositifs de régulation.

Le problème posé est de réaliser un dispositif de régulation simple, pouvant être utilisé pour réguler de façon précise l'alimentation de la résistance d'un barbecue, que celui-ci soit muni d'une grille ou d'une plaque de cuisson, et dont la régulation ne dépend pas de la tension électrique du secteur.

La solution est un dispositif de régulation comportant un thermostat connecté à une sonde de température. L'invention est définie par la revendication 1 et les revendications dépendantes. Selon l'invention, la sonde et la résistance sont agencées l'une par rapport à l'autre de sorte que le dispositif régule l'alimentation électrique de la résistance en fonction de la quantité de rayonnement thermique émis par la résistance et capté par le thermostat.

Ainsi, selon l'invention, le même dispositif de régulation peut être utilisée aussi bien pour réguler un barbecue muni d'une plaque de cuisson qu'un barbecue muni d'une grille de cuisson. Quand le barbecue est muni d'une plaque de cuisson, le thermostat régule en fonction de la température de la plaque et agit comme un thermostat, et quand le barbecue est muni d'une grille de cuisson, il régule en fonction du rayonnement thermique émis par la résistance et agit comme un doseur d'énergie.

D'autres avantages et particularités apparaîtront dans la description qui va suivre. Aux dessins annexés
La figure 1 est une vue en perspective d'un dispositif conforme à la présente invention utilisé dans un barbecue muni d'une grille de cuisson ;
La figure 2 est une vue en perspective d'un dispositif conforme à la présente invention utilisé dans un barbecue muni d'une grille de cuisson ; et
La figure 3 est une vue de profil illustrant la coopération de la sonde et de la plaque de cuisson.

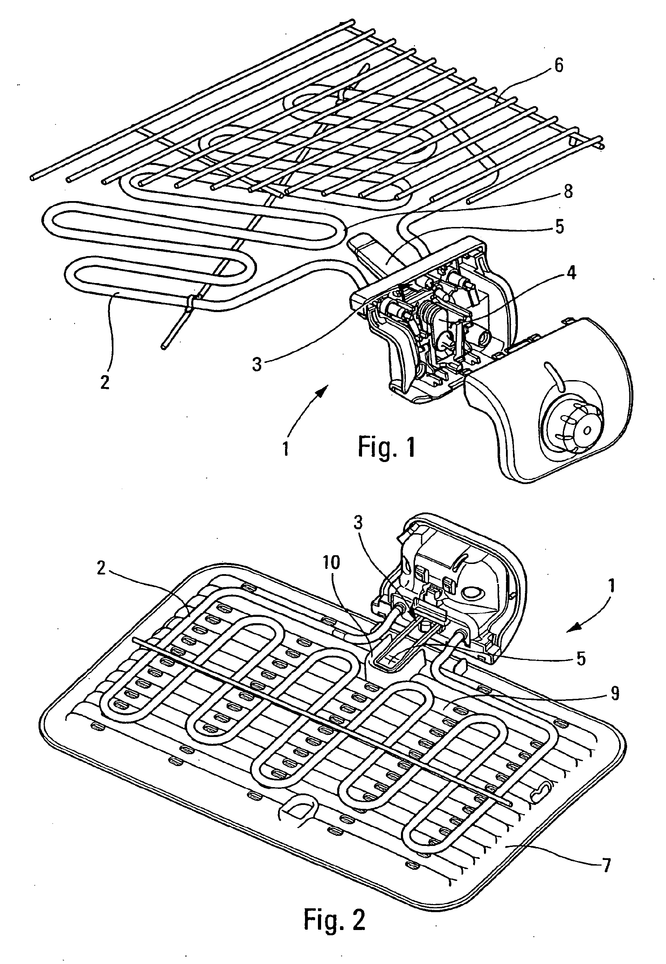

Les figures 1 et 2 montrent un sous-ensemble chauffant 1 adapté à être utilisé soit dans un barbecue muni d'une grille de cuisson 6 (figure 1), soit dans un barbecue muni d'une plaque de cuisson 7 (figure 2).

Le sous-ensemble chauffant 1 comprend une résistance électrique 2 servant de source de chaleur pour cuire un aliment, et un dispositif de régulation 3 adapté à réguler l'alimentation électrique de la résistance 2. Le dispositif de régulation 3 comprend un thermostat 4 qui est connecté à une sonde de température 5.

La sonde 5 et la résistance 2 sont agencées l'une par rapport à l'autre de sorte que le dispositif de régulation 3 régule l'alimentation électrique de la résistance 2 en fonction du rayonnement thermique émis par la résistance 2 quand le barbecue est muni d'une grille de cuisson 6, et, quand le barbecue est muni d'une plaque de cuisson 7, en fonction de la température de la plaque 7.

Plus précisément, la sonde 5 est montée sur le dispositif de régulation 3 de sorte qu'une partie de sa surface est adjacente à une partie de la résistance 2 et reçoit, quand le barbecue est muni d'une grille de cuisson 6, le rayonnement thermique émis par la résistance 2. En l'occurrence, la résistance 2 présente plusieurs courbes sous forme d'épingle à cheveux et la sonde 5 est située face à une extrémité 8 d'une boucle formant une telle épingle.

De façon intéressante, le sous-ensemble chauffant 1 comprenant un tel dispositif de régulation 3 est une pièce unique que l'on monte sur le barbecue, les positions relatives de la sonde 5 et de la résistance 2 étant fixées dès la réalisation du sous-ensemble chauffant 1.

Quand le barbecue est muni d'une plaque de cuisson 7, une partie de la surface de la sonde 5 est en contact avec une partie d'une face 9 de la plaque 7 de façon à détecter la température de cette dernière. En l'occurrence, cette face de contact 9 est la face qui est opposée à la face de cuisson adaptée à recevoir l'aliment à cuire.

L'avantage d'avoir un sous-ensemble chauffant 1 formant une pièce unique est que les problèmes de montage précis de la plaque de cuisson 7 par rapport à la sonde 5 afin d'avoir un bon contact thermique sont considérablement réduits : la plaque 7 qui est conformée de façon à s'adapter précisément par rapport à la résistance 2, s'adapte de fait à la sonde 5 dont la position par rapport à la résistance 2 est prédéfinie.

De préférence, afin que le thermostat 4 reçoive une information précise et représentative de la température de la plaque 7 quand le barbecue est muni d'une plaque de cuisson 7, un élément de protection 10 est disposé entre la sonde 5 et la résistance 2. Cet élément de protection 10 est adapté à empêcher le rayonnement thermique émis par la résistance 2 d'être reçu par la sonde 5.

En l'occurrence, et comme on peut le voir à la figure 2, l'élément de protection 10 est une nervure 10 qui est réalisée sur la face de contact 9 de la plaque 7 et qui entoure la sonde 5 quand celle ci est en contact avec la plaque 7.

De préférence, afin d'assurer un bon contact entre la sonde 5 et la plaque 7 quand le barbecue est muni d'une plaque de cuisson 7, la sonde 5 est montée sur le dispositif de régulation 3 par l'intermédiaire d'un ressort 11 qui est adapté à la solliciter 5 en direction de la plaque 7.

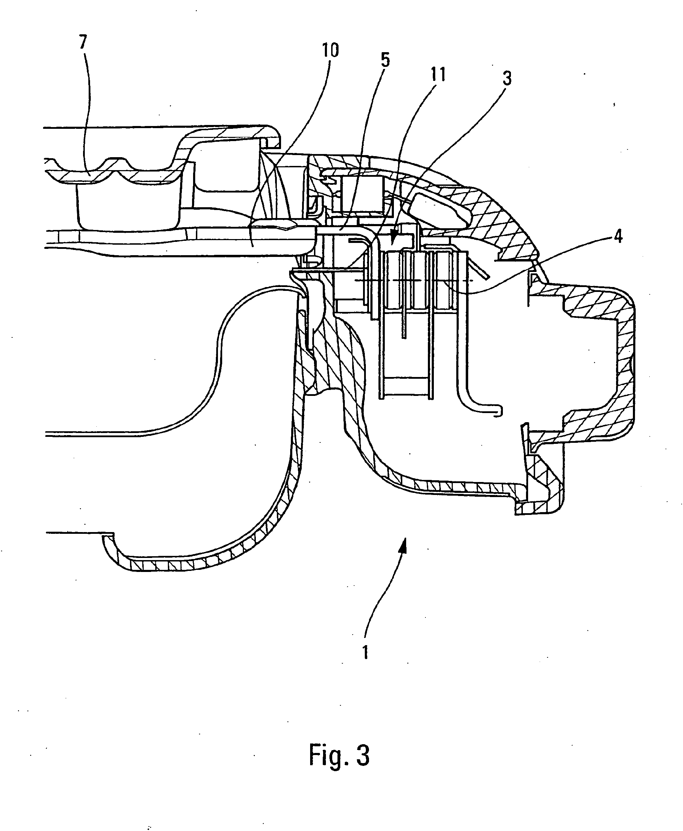

Comme on peut le voir à la figure 3, le ressort 11 est solidarisé, par une première extrémité au boîtier du sous-ensemble chauffant 1, et par une seconde extrémité au thermostat 4 (et donc, indirectement, à la sonde 5).

Selon un dispositif de régulation 3 conforme à la présente invention :
- Quand le barbecue est muni d'une plaque de cuisson 7, l'énergie thermique qui est reçue par l'aliment dépend de la température de la plaque 7, est régulée par le thermostat 4 agissant en tant que thermostat: il coupe l'alimentation de la résistance 2 quand la température qu'il détecte atteint une température de coupure qui correspond à une température de consigne de la plaque 7. L'alimentation de la résistance 2 dépend directement de la température de la plaque 7 et, quand un aliment froid est déposé sur la plaque 7, le thermostat 4 tient compte de la baisse de température de la plaque 7.
- Quand le barbecue est muni d'une grille de cuisson 6, l'énergie thermique qui est reçue par l'aliment dépend du rayonnement thermique émis par la résistance 2, est régulée par le thermostat 4 agissant en tant que doseur d'énergie: il coupe l'alimentation de la résistance 2 quand la température qu'il détecte atteint la température de coupure qui correspond à la température transmise par la sonde 5 et générée par la réception du rayonnement thermique émis par la résistance 2 pour une quantité d'énergie électrique donnée. L'alimentation de la résistance 2 dépend directement de la quantité d'énergie thermique émise par la résistance 2 et donc de la quantité d'énergie électrique qu'elle a reçue, et, quand un aliment froid est déposé sur la grille 6, le thermostat 4 ne tient pas compte de la baisse de température de la grille 6.

Par ailleurs, contrairement aux doseurs d'énergie, la coupure de l'alimentation dépend du rayonnement de la résistance électrique et non pas de la température d'un bilame dont l'énergie de basculement dépend de la tension du secteur (la température du bilame du thermostat 4 dépend du rayonnement émis par la résistance 2). Ainsi, seule la résistance a à être adaptée à la tension du pays.

De préférence, afin d'avoir un même dispositif 3 précis et représentatif, qu'il soit utilisé dans un barbecue muni d'une grille de cuisson 6 ou dans un barbecue muni d'une plaque de cuisson 7, la distance séparant la sonde 5 de la résistance 2 et la surface de contact de la sonde 5 avec la plaque 7 sont telles que la température de coupure du thermostat 4 qui correspond à la température transmise par la sonde 5 quand la plaque 7 est à sa température de consigne, correspond aussi à la température qui est transmise par la sonde 5 et qui est générée par la réception du rayonnement thermique émis par la résistance 2 alimentée de la quantité d'énergie de consigne.

Dans le présent exemple, la sonde 5 est une barrette en aluminium qui a la forme d'un parallélogramme rectangle et qui est fixée au thermostat 4 par une de ses extrémités.

La longueur de la barrette qui est prise selon une première direction qui est dans le plan de la surface de contact avec la plaque de cuisson 7 et orientée de l'extrémité de la barrette par laquelle elle est fixée au thermostat 4 à l'extrémité libre de la barrette, est de préférence comprise entre 50 et 100 mm.

La largeur de la barrette qui est prise selon une seconde direction qui est dans le plan de la surface de contact avec la plaque de cuisson 7 et normale à la première direction, est de préférence comprise entre 15 et 25 mm.

L'épaisseur de la barrette qui est prise selon une troisième direction qui est normale aux deux premières, est de préférence comprise entre 0,5 et 2 mm.

La distance la plus petite séparant la sonde 5 de la résistance 2 est de préférence comprise entre 3 et 7 mm.

Un tel dispositif de régulation peut ainsi être monté sur un barbecue ne pouvant recevoir qu'une plaque de cuisson, ou sur un barbecue ne pouvant recevoir qu'une grille de cuisson, ou sur un barbecue pouvant recevoir une grille de cuisson et une plaque de cuisson, au choix de l'utilisateur.

## Revendications

1. Barbecue électrique comprenant une grille de cuisson (6), une résistance électrique (2), et un dispositif de régulation (3) de l'alimentation électrique de la résistance (2), le dispositif de régulation (3) comportant un thermostat (4) connecté à une sonde de température (5), la sonde (5) et la résistance (2) étant agencées l'une par rapport à l'autre de sorte que, quand le barbecue est muni de la grille (6), le dispositif de régulation (3) régule l'alimentation de la résistance (2) en fonction de la quantité de rayonnement thermique émis par cette dernière, capté par la sonde (5) et transmis au thermostat (4) agissant en tant que doseur d'énergie, **caractérisé en ce que** le barbecue comprend également une plaque de cuisson (7), et, quand il est muni de la plaque de cuisson (7), une partie de la surface de la sonde (5) est en contact avec la plaque de cuisson (7) de façon à détecter la température de cette dernière et le dispositif de régulation (3) régule l'alimentation électrique de la résistance (2) en fonction de cette température.

2. Barbecue selon la revendication 1, **caractérisé en ce que** la sonde (5) est montée sur le dispositif de régulation (3) par l'intermédiaire d'un ressort (11) qui est adapté à solliciter la sonde (5) en direction de la plaque de cuisson (7) et à assurer un bon contact entre la sonde (5) et la plaque (7), quand le barbecue est muni de la plaque de cuisson (7).

3. Barbecue selon la revendication 2, **caractérisé en ce que** le ressort (11) est solidarisé, par une première extrémité, au boîtier du sous-ensemble chauffant (1), et, par une seconde extrémité, au thermostat (4).

4. Barbecue selon l'une des revendications 1 à 3, **caractérisé en ce qu'**un élément de protection (10), adapté à empêcher le rayonnement émis par la résistance (2) d'être reçu par la sonde (5), est disposé entre la sonde (5) et la résistance (2) quand le barbecue est muni de la plaque de cuisson (7).

5. Barbecue selon la revendication 4, **caractérisé en ce que** l'élément de protection (10) est une nervure (10) réalisée sur la face de contact (9) de la plaque de cuisson (7), et adaptée à entourer la sonde (5) quand celle ci est en contact avec la plaque (7).

6. Barbecue selon l'une des revendications 1 à 5, **caractérisé en ce que** d'une part la distance séparant la sonde (5) de la résistance (2) et d'autre la surface de contact de la sonde (5) avec la plaque de cuisson (7) quand le barbecue est muni de celle-ci sont telles que la température à laquelle le thermostat (4) coupe l'alimentation de la résistance (2) quand le barbecue est munie de la plaque de cuisson (7) qui correspond à la température de consigne de la plaque (7) transmise par la sonde (5), est la température à laquelle le thermostat (4) coupe l'alimentation de la résistance (2) quand le barbecue est muni de la grille de cuisson (6) qui correspond à la température transmise par la sonde (5) et générée par la réception de la quantité de rayonnement thermique émis par la résistance (2) correspondant à la quantité de consigne d'énergie électrique reçue par la résistance (2).

7. Barbecue selon l'une des revendications 1 à 6, **caractérisé en ce que** la distance séparant la sonde (5) de la résistance (2) est comprise entre 3 et 7 mm.

8. Barbecue selon l'une des revendications 1 à 7, **caractérisé en ce que** la sonde (5) a une longueur comprise entre 50 et 100 mm.

9. Barbecue selon l'une des revendications 1 à 8, **caractérisé en ce que** la sonde (5) a une largeur comprise entre 15 et 25 mm.

10. Barbecue selon l'une des revendications 1 à 9, **caractérisé en ce que** la sonde (5) a une épaisseur comprise entre 0,5 et 2 mm.

11. Barbecue selon l'une des revendications 1 à 10, **caractérisé en ce que** la sonde (5) est une barrette en aluminium.

12. Barbecue selon l'une des revendications 1 à 11, **caractérisé en ce** le dispositif de régulation (3) fait partie d'un sous-ensemble chauffant (1) formant une pièce unique et comportant la résistance (2).

## Claims

1. Electric barbecue including a cooking grill (6), an electric heating element (2), and a device (3) for regulating the power output of the element (2), the regulating device (3) including a thermostat (4) connected to a temperature sensor (5), the sensor (5) and the heating element (2) being arranged one relative to the other so that when the barbecue is equipped with the grill (6), the regulating device (3) regulates the output of the element (2) in relation to the amount of radiant heat emitted by the latter, captured by the sensor (5) and transmitted to the thermostat (4) serving to regulate the energy supply, **characterised in that** the grill also includes a cooking plate (7), and, when it is equipped with the cooking plate (7), a part of the surface of the sensor (5) is in contact with the cooking plate (7) so as to detect the temperature of the latter and the regulating device (3) regulates the power output of the element (2) in relation to this temperature.

2. Barbecue according to claim 1, **characterised in that** the sensor (5) is mounted on the regulating device (3) through a spring (11) which is adapted to urge the sensor (5) towards the cooking plate (7) and to ensure good contact between the sensor (5) and the plate (7), when the barbecue is equipped with the cooking plate (7).

3. Barbecue according to claim 2, **characterised in that** the spring (11) is secured, by a first end, to the housing of the heating subassembly (1) and, by a second end, to the thermostat (4).

4. Barbecue according to any one of claims 1 to 3, **characterised in that** a protective element (10), adapted to prevent the radiant heat emitted by the element (2) from being received by the sensor (5), is disposed between the sensor (5) and the element (2) when the barbecue is equipped with the cooking plate (7).

5. Barbecue according to claim 4, **characterised in that** the protective element (10) is a rib (10) formed on the contact face (9) of the cooking plate (7), and adapted to surround the sensor (5) when the latter is in contact with the plate (7).

6. Barbecue according to any one of claims 1 to 5, **characterised in that**, on the one hand, the distance separating the sensor (5) from the element (2) and, on the other hand, the contact surface of the sensor (5) with the cooking plate (7) when the barbecue is equipped therewith, are such that the temperature at which the thermostat (4) cuts off the power supply to the element (2) when the barbecue is equipped with the cooking plate (7) which corresponds to the setpoint temperature of the plate (7) transmitted by the sensor (5), is the temperature at which the thermostat (4) cuts off the power supply to the element (2) when the barbecue is equipped with the cooking grill (6) which corresponds to the temperature transmitted by the sensor (5) and generated by the reception of the quantity of radiant heat emitted by the element (2) corresponding to the setpoint quantity of electrical energy received by the element (2).

7. Barbecue according to any one of claims 1 to 6, **characterised in that** the distance separating the sensor (5) from the element (2) is between 3 and 7 mm.

8. Barbecue according to any one of claims 1 to 7, **characterised in that** the sensor (5) has a length of between 50 and 100 mm.

9. Barbecue according to any one of claims 1 to 8, **characterised in that** the sensor (5) has a width of between 15 and 25 mm.

10. Barbecue according to any one of claims 1 to 9, **characterised in that** the sensor (5) has a thickness between 0.5 and 2 mm.

11. Barbecue according to any one of claims 1 to 10, **characterised in that** the sensor (5) is a strip of aluminium.

12. Barbecue according to any one of claims 1 to 11, **characterised in that** the regulating device (3) is part of a heating subassembly (1) forming one piece and including the element (2).

## Patentansprüche

1. Elektrogrill umfassend einen Bratrost (6), einen elektrischen Widerstand (2) und eine Regeleinrichtung (3) der Stromversorgung des Widerstands (2), welche Regeleinrichtung (3) einen an einen Temperaturfühler (5) angeschlossenen Thermostat (4) aufweist, wobei der Fühler (5) und der Widerstand (2) derart zueinander angeordnet sind, dass, wenn der Grill mit dem Rost (6) versehen ist, die Regeleinrichtung (3) die Stromversorgung des Widerstandes (2) in Abhängigkeit von der Menge der von letzterem abgegebenen Wärmestrahlung regelt, welche vom Fühler (5) aufgefangen und an den als Energiedosierer wirkenden Thermostat (4) weitergeleitet wird, **dadurch gekennzeichnet , dass** der Grill auch eine Bratplatte (7) umfasst und dass, wenn er mit der Bratplatte (7) versehen ist, ein Teil der Oberfläche des Fühlers (5) in Kontakt mit der Bratplatte (7) ist, sodass er deren Temperatur erkennt und die Regeleinrichtung (3) die Stromversorgung des Widerstands (2) in Abhängigkeit von dieser Temperatur regelt.

2. Elektrogrill nach Anspruch 1, **dadurch gekennzeichnet , dass** der Fühler (5) auf der Regeleinrichtung (3) mittels einer Feder (11) montiert ist, welche dazu ausgelegt ist, den Fühler (5) in Richtung der Bratplatte (7) vorzuspannen und einen guten Kontakt zwischen dem Fühler (5) und der Platte (7) sicherzustellen, wenn der Grill mit der Bratplatte (7) versehen ist.

3. Elektrogrill nach Anspruch 2, **dadurch gekennzeichnet , dass** die Feder (11) durch ein erstes Ende mit dem Gehäuse der Heizeinrichtung (1) und durch ein zweites Ende mit dem Thermostat (4) fest verbunden ist.

4. Elektrogrill nach einem der Ansprüche 1 bis 3, **dadurch gekennzeichnet , dass** ein Schutzelement (10), das dazu ausgelegt ist, ein Empfangen der durch den Widerstand (2) abgegebenen Strahlung durch den Fühler (5) zu verhindern, zwischen dem Fühler (5) und dem Widerstand (2) angeordnet ist, wenn der Grill mit der Bratplatte (7) versehen ist.

5. Elektrogrill nach Anspruch 4, **dadurch gekennzeichnet, dass** das Schutzelement (10) eine Rippe (10) ist, die auf der Kontaktfläche (9) der Bratplatte (7) ausgebildet ist und dazu ausgelegt ist, den Fühler (5) zu umgeben, wenn dieser in Kontakt mit der Platte (7) ist.

6. Elektrogrill nach einem der Ansprüche 1 bis 5, **dadurch gekennzeichnet , dass**, zum einen der Abstand zwischen dem Fühler (5) und dem Widerstand (2) und zum anderen die Kontaktfläche des Fühlers (5) mit der Bratplatte (7), wenn der Elektrogrill mit dieser versehen ist, derart sind, dass die Temperatur bei der der Thermostat (4) die Versorgung des Widerstandes (2) unterbricht, wenn der Elektrogrill mit der Bratplatte (7) versehen ist, welche Temperatur dem Sollwert der vom Fühler (5) übertragenen Temperatur der Bratplatte (7) entspricht, diejenige Temperatur ist, bei der der Thermostat (4) die Versorgung des Widerstandes (2) unterbricht, wenn der Elektrogrill mit dem Bratrost (6) versehen ist, welche der Temperatur entspricht, die vom Fühler (5) übertragen und durch den Empfang der vom Widerstand (2) abgegebenen Strahlungsmenge erzeugt wird, die der elektrischen Sollenergiemenge entspricht, die vom Widerstand (2) empfangen wird.

7. Elektrogrill nach einem der Ansprüche 1 bis 6, **dadurch gekennzeichnet , dass** der Abstand zwischen dem Fühler (5) und dem Widerstand (2) zwischen 3 und 7 mm beträgt.

8. Elektrogrill nach einem der Ansprüche 1 bis 7, **dadurch gekennzeichnet , dass** der Fühler (5) eine Länge zwischen 50 und 100 mm hat.

9. Elektrogrill nach einem der Ansprüche 1 bis 8, **dadurch gekennzeichnet , dass** der Fühler (5) eine Breite zwischen 15 und 25 mm hat.

10. Elektrogrill nach einem der Ansprüche 1 bis 9, **dadurch gekennzeichnet , dass** der Fühler (5) eine Dicke zwischen 0,5 und 2 mm hat.

11. Elektrogrill nach einem der Ansprüche 1 bis 10, **dadurch gekennzeichnet , dass** der Fühler (5) ein Steg aus Aluminium ist.

12. Elektrogrill nach einem der Ansprüche 1 bis 11, **dadurch gekennzeichnet , dass** die Regeleinrichtung (3) Teil einer Heizeinrichtung (1) ist, welche ein einziges Teil bildet und den Widerstand (2) aufweist.
